# EUROPEAN PATENT APPLICATION

(11) **EP 0 651 539 A1**
(43) Date of publication of application: **03.05.1995**
(21) Application number: 94202835.8
(22) Date of filing: 30.09.1994
(51) Int. Cl.: H04L 27/18, H03D 3/00, G06K 7/10, G06K 19/00, G06K 7/08, G06K 7/00

(54) **System for contactless information transfer with phase modulation**

(30) Priority: 01.10.1993 NL 9301697
(71) Applicant: N.V. Nederlandsche Apparatenfabriek NEDAP, NL-7141 DE Groenlo (NL)
(72) Inventor: Kip, Harm Jacob, NL-7132 CS LIchtenvoorde (NL); Hogen Esch, Johannes Harm Lukas, NL-7122 ZN Aalten (NL)
(74) Representative: Smulders, Theodorus A.H.J., Ir.

(57) **Abstract**

The invention relates to a system for contactless information transfer. The information transfer from a reading device to an information carrier takes place by means of the phase shift keying (PSK) technique. According to the invention, the at least one coil of the information carriers is connected to a phase demodulator comprising a phase-locked loop including a voltage-controlled oscillator. The output signal of the voltage-controlled oscillator is applied to a phase device which forms from the output signal a predetermined number of phase reference signals having a different predetermined phase relative to the output signal. The predetermined phases correspond with the possible phase jumps in the signal applied to the phase demodulator. Selection means are provided which select one of the phase reference signals and apply same, via a circuit with a relatively large time constant, to the input of the voltage-controlled oscillator for forming a phase-stable reference signal for the demodulation of the phase-coded data signal coming from the at least one coil.

## Description

This invention relates to a system for the purpose of signal transmission in contactlessly operating electronic information cariers, such as identification cards or chip cards. These cards contain one or more electronic chips and can be used to replace the known bank cards or credit cards, while being capable of providing greater safety in protecting the information.

According to standard ISO 10536 (in preparation), drafted by the International Standardisation Organisation, the information transfer from the card reader to the card can take place via two small coils in the card which cooperate with two small coils in the card reader. The coils are typically flat coils arranged next to each other. In order to enable the card, which contains an electronic chip, to be provided with supply energy in a simple manner as well, a signal is applied to each of these small coils, the signals having a relative phase difference of 90°. After double-sided rectification and parallel switching, a DC voltage is obtained which is never zero volts. As a consequence, a very small smoothing capacitor will suffice, which can be arranged on the electronic chip.

In the above-described system, data transmission takes place through phase modulation, whereby the phase difference between the signals on the two coils is switched from +90° to -90° and vice versa, one situation representing a logic "1" and the other situation representing a logic "0".

The use of two small coils in the card entails limitations in that the card has to be accurately oriented relative to the corresponding coils in the card reader and in that only a rather small reading distance is possible. Accordingly, it would be advantageous if the cards could operate with one coil rather than two. In that case, however, it is desirable that the same modulation technique for the data transfer between the card reader and the card can be used as in the case of cards with two coils. The advantage of using a single coil is that the orientation of the card relative to the card reader is less critical and further that a more substantial reading distance is possible.

A known modulation technique which is suitable for transmitting information via one channel is the frequency modulation technique, also referred to as FM or FSK (Frequency Shift Keying). Demodulation then takes place mostly via a so-called phase loop, where a phase comparator controls a voltage-controlled oscillator until the oscillator runs synchronously with the carrier frequency. The control signal of the oscillator then corresponds with the data signal.

In phase modulation, also referred to as PSK (Phase Shift Keying), in principle the same demodulation technique is possible, but a drawback is that it involves pulse-shaped signals, which entails less stability. Also, in this manner a distinction between a logic "1" and a logic "0" is difficult to make and can only be derived from known information, such as, for instance, a start bit.

The object of the present invention is to provide a solution to this problem. To this end, according to the invention, a system for contactless information transfer, comprising a plurality of electronic information carriers and a plurality of reading devices adapted for contactlessly reading information from the electronic information carriers and writing information in the electronic information carriers, the reading devices comprising two substantially flat coils adapted for cooperation with at least one coil of an information carrier for the purpose of transfer of energy and information between the reading device and the information carrier, at least the information transfer from a reading device to an information carrier taking place by means of the phase shift keying (PSK) technique, is characterized in that the at least one coil of the information carriers is connected to a phase demodulator comprising a phase-locked loop with a voltage-controlled oscillator, the output signal of the voltage-controlled oscillator being applied to a phase device which forms from the output signal a predetermined number of phase reference signals having a different predetermined phase relative to the output signal, the predetermined phases corresponding with the possible phase jumps in the signal applied to the phase demodulator, and selection means are provided which select one of the phase reference signals and apply same, via a circuit with a relatively large time constant, to the input of the voltage-controlled oscillator for forming a phase-stable reference signal for the demodulation of the phase-coded data signal coming from the at least one coil.

Hereinafter the invention will be further described with reference to the accompanying drawing. In the drawing:
Fig. 1 diagrammatically shows a non-contact identification card comprising two small coils;
Figs. 2 and 3 show two vector diagrams;
Fig. 4 diagrammatically shows an example of coils, cooperating in operation, of a non-contact identification card and a card reader;
Fig. 5 diagrammatically shows another example of coils, cooperating in operation, of a non-contact identification card and a card reader;
Fig. 6 diagrammatically shows an example of a demodulator circuit according to the invention; and
Fig. 7 diagrammatically shows another example of a demodulator circuit according to the invention.

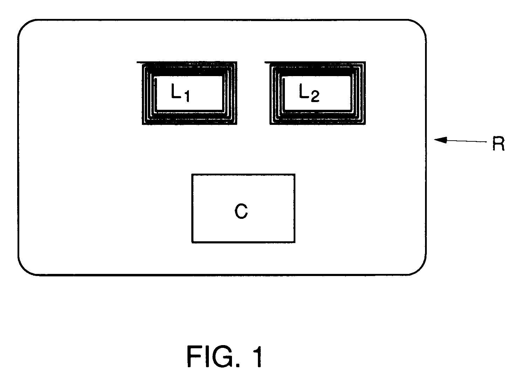

Fig. 1 diagrammatically shows a contactless chip card R with two induction coils L1 and L2 and an electronic circuit which in this case is constructed as a chip C.

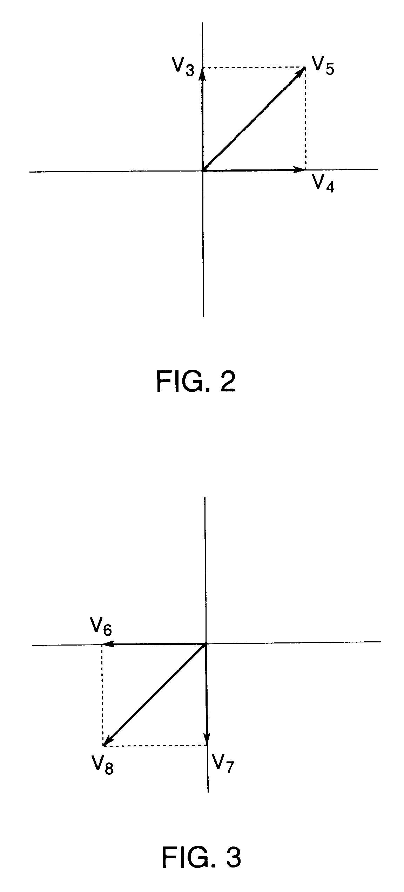

Fig. 2 shows a vector diagram with signal vectors V3 and V4 which, by way of example, represent the phase and the amplitude of the signals in the small coils, for instance for a logic "0".

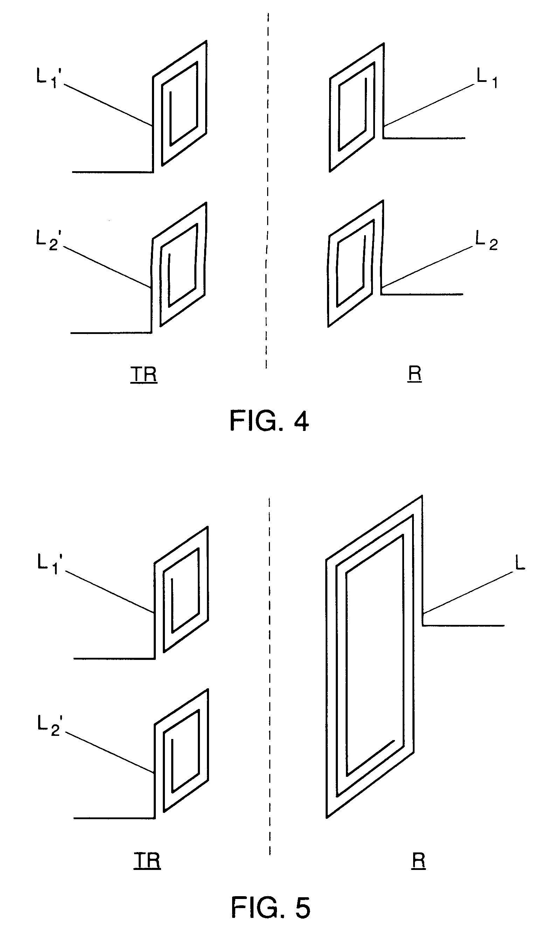

As is indicated in Figs. 4 and 5, the card reader or transmitter/receiver TR also comprises two induction coils L1', L2', which are located opposite the coil or coils of a card R when the card has been inserted into a card reader TR or has otherwise been placed in an operative position relative to the card reader.

If, for the purpose of data transfer, the card were to comprise only one small coil L1 or L2, then, of course, only one of the signal vectors V3 or V4 would be available. The card might also comprise a single coil L (Fig. 5), which covers the two small coils L1', L2'. In this situation the signal received by the coil of the card corresponds in phase and amplitude with the resultant vector V5, as indicated in the vector diagram of Fig. 2.

Fig. 3 shows the vector diagram of the signals V6 and V7, which are present in the coils L1 and L2, respectively, in the case of a logic "1".

In the case of a single card coil L, covering the two small coils L1', L2' of the card reader TR, the signal corresponds with the resultant vector V8.

It can be seen in Figs. 2 and 3 that the phase jump between a "0" and a "1" is 90° for the small coils, whereas the phase jump is 180° for a larger card coil which, so to speak, encompasses the two small coils of the card reader. The relative difference between the phase of one small coil and the phase of the other small coil is +90° in one situation and -90° in the other. It is clear to see that in all situations only four phase positions occur, viz. 0°, 90°, 180° and 270°. The present invention makes use of this circumstance to realize a stable reference signal whose phase does not change if PSK modulation of the carrier frequency is utilized.

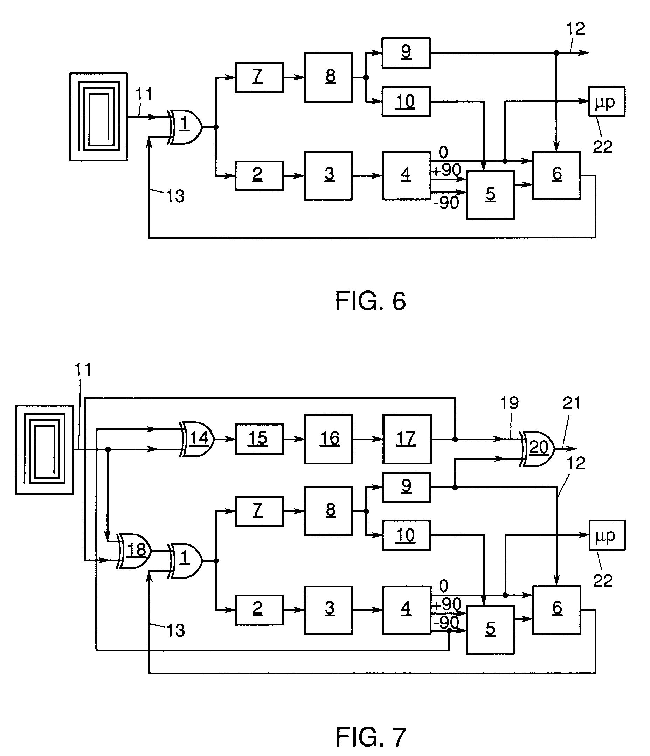

Fig. 6 diagrammatically shows an example of a demodulator for use in a system according to the invention. The electronic circuit shown comprises a voltage-controlled oscillator or VCO 3 followed by a divider-by-two 4 which generates the four possible phase conditions. The four possible phase conditions are 0°, 90°, 180° and 270° (-90°). By means of a phase comparator 1 the incoming signal 11 is compared with a signal supplied by the VCO 3. Depending on the type of card, the signal 11 may come from a single small coil L1 or L2 or from a relatively large coil L (Fig. 5). However, the circuit shown can also process the combined signal of two small coils L1, L2. The output of the phase comparator 1 is connected to the input of the VCO 3 via a 'slow' filter 2. By a 'slow' filter is meant a circuit with a relatively large time constant, such as a low-pass filter. Together, the phase comparator 1, the filter 2 and the VCO 3 form a phase-locked loop (PLL). The VCO 3 will now be locked to the incoming signal.

For detecting the +90° and -90° phase jumps, a number of components are added. The output of the phase comparator 1 is also connected to the input of a 'fast' filter 7. By a 'fast' filter is meant a circuit with a relatively small time constant, such as a high-pass filter. This 'fast' filter 7 in turn is connected to a comparator 8 adapted to compare an input voltage with a reference. The comparator 8 controls a toggle flip-flop 9 and a set/reset flip-flop 10. Depending on the states of the flip-flops 9 and 10, and by means of multiplexers 5 and 6 connected to the outputs of the divider-by-two 4, a signal 13 with the proper phase, i.e. the phase which approximates the instantaneous phase of the input signal most closely, will be applied to the phase comparator 1.

If the incoming signal now has a 90° phase jump, the 'fast' filter 7, even before the 'slow' filter 2 can respond, will control the comparator 8 and cause the flip-flops 9 and 10 and the multiplexers 5 and 6 to assume the proper states, so that the reference signal 13 with the proper phase is applied to the phase comparator 1. Because this switch takes place so fast, the voltage-controlled oscillator 3 has not yet been given sufficient time to adjust to the incoming signal with the new phase. In principle, the incoming signal 11 for the voltage-controlled oscillator 3 is modulated with the demodulated data signal 12 which appears at the output of the toggle flip-flop 9. As a result, the signal applied to the voltage-controlled oscillator 3 remains the same, so that it constitutes a stable reference.

For detecting the 180° phase jumps, a number of components are added to the circuit of Fig. 6, as is indicated, by way of example, in Fig. 7. The incoming signal 11 is applied to an input of a second phase comparator 14. Applied to the other input of phase comparator 14 is the signal provided by the divider-by-two, having a phase of -90°. Then the output of the phase comparator 14 is connected via a 'fast' filter 15 to the input of a comparator 16 which controls a set/reset flip-flop 17. This set/reset flip-flop 17 directly provides the data signal 19 for the 180° phase jumps. The set/reset flip-flop 17 also controls an exclusive OR gate 18, which inverts the incoming signal 11 only for phase comparator 1 (i.e. shifts it 180° in phase). When the 90° data signal 12 and the 180° data signal 19 are combined by means of an OR gate 20, the data signal 21 appears.

The invention is based on the principle that the 'fast' filters, when the phase of the incoming signal varies, are so fast that the comparators and the flip-flops switch sufficiently fast to cause the multiplexers 5 and 6 to transmit a signal of the proper adjusted phase to the phase comparator 1. The output of the voltage-controlled oscillator then provides a signal of constant frequency, whose phase is stable and which can serve as a reference signal for the demodulator. Of the reference signal generated by the voltage-controlled oscillator, for instance the 0° signal, of the divider-by-two 4, can serve as a constant clock frequency, with a stable phase, for instance for a microprocessor 22.

The circuit shown in Fig. 6 is exclusively suitable for detection of 90° phase jumps and can thus be used in a card equipped with a single small coil, i.e. a coil corresponding and cooperating with one of the two (standardized) coils of a card reader. The circuit of Fig. 7, however, can also detect 180° phase jumps and is therefore suitable for use in a contactless electronic information carrier comprising a single large coil which cooperates with the two standardized coils of a card reader. If desired, however, the circuit of Fig. 7 can also be used if the card contains two small coils, since in that case, too, a 180° phase jump occurs, as appears from the vectors V5 and V8 of Figs. 2 and 3. In principle, therefore, the circuit of Fig. 7 is suitable for use in any type of card which should be able to cooperate with a card reader with two small coils as described in standard ISO 10536.

It is further noted that, when using a single coil in a passive information carrier, the supply voltage of the information carrier can be drawn from the coil in known manner - see, for instance, U.S. Patent 4,196,418 - through double-sided rectification and smoothing with a capacitor. However, the invention can also be used with active information carriers, i.e. information carriers comprising a supply battery. It will be clear that for this network as well as for the formation and detection of the four possible phase conditions, other circuitry is conceivable, which is obvious to a person of ordinary skill. It is also possible to use a different number of phase conditions, with the phase angle differences between successive phase conditions being equal. Further, the invention can also be used with information carriers which are not card-shaped. These solutions, which contemplate the same effect, are understood to fall within the scope of this invention.

## Claims

1. A system for contactless information transfer, comprising a plurality of electronic information carriers and a plurality of reading devices adapted for contactlessly reading information from the electronic information carriers and writing information in the electronic information carriers, the reading devices comprising two substantially flat coils adapted for cooperation with at least one coil of an information carrier for the purpose of transfer of energy and information between the reading device and the information carrier, at least the information transfer from a reading device to an information carrier taking place by means of the phase shift keying (PSK) technique, characterized in that the at least one coil of the information carriers is connected with a phase demodulator comprising a phase-locked loop including a voltage-controlled oscillator, the output signal of the voltage-controlled oscillator being applied to a phase device which forms from the output signal a predetermined number of phase reference signals having a different predetermined phase relative to said output signal, the predetermined phases corresponding with the possible phase jumps in the signal applied to the phase demodulator, selection means being provided which select one of the phase reference signals and apply same, via a circuit with a relatively large time constant, to the input of the voltage-controlled oscillator for forming a phase-stable reference signal for the demodulation of the phase-coded data signal coming from the at least one coil.

2. A system according to claim 1, characterized in that the selection means comprise a circuit with a relatively small time constant, which applies control signals to at least one multiplexer circuit to which the phase reference signals are applied.

3. A system according to claim 1 or 2, characterized in that the phase-locked loop comprises a phase comparator which is connected to the voltage-controlled oscillator via a low-pass filter and to which the selected phase reference signal and the phase-coded signal or a signal derived therefrom is applied.

4. A system according to any one of the preceding claims, characterized in that the phase device is a divider-by-two.

5. A system according to any one of claims 2-4, characterized in that in operation the circuit with a small time constant and the circuit with a large time constant both receive the same input signal.

6. A system according to claims 3 and 5, characterized in that the output of the phase comparator provides the input signal for the circuits with a small and a large time constant, respectively.

7. A system according to any one of claims 2-6, characterized in that the circuit with a small time constant comprises a high-pass filter which is connected via a comparator to a toggle flip-flop and a set/reset flip-flop, the output signals of the flip-flops constituting the control signals for the at least one multiplexer circuit, and the output signal of the toggle flip-flop constituting the demodulated data signal.

8. A system according to any one of the preceding claims, characterized in that the phase-locked loop and the selection means are adapted to process and detect phase jumps of +90° or -90° and separate means are provided for detecting phase jumps of 180°.

9. A system according to claim 8, characterized in that the means for detecting phase jumps of 180° comprise a second phase comparator to which the signal coming from the at least one coil is applied as well as a phase reference signal shifted -90° in phase; a circuit with a small time constant connected to the output of the phase comparator; a comparator and a flip-flop, the output signal of the flip-flop constituting the demodulated data signal for the 180° phase jumps.

10. A system according to claim 9, characterized in that the output for the demodulated data signal corresponding with the 90° phase jumps, together with the output for the demodulated data signal corresponding with the 180° phase jumps, is connected to an exclusive OR gate which provides the eventual demodulated data signal.

11. A system according to any one of the preceding claims, characterized in that at least some of the electronic information carriers are card-shaped.

12. A system according to claim 11, characterized in that the electronic information carriers comprise chip cards.

13. A system according to any one of the preceding claims, characterized in that the electronic information carriers are passive information carriers, which do not comprise an energy source of their own.

14. An electronic information carrier for use in a system according to any one of the preceding claims.
